# EUROPEAN PATENT SPECIFICATION

(11) **EP 1 090 273 B1**
(45) Date of publication and mention of the grant of the patent: **14.11.2012**
(21) Application number: 99921409.1
(22) Date of filing: 19.04.1999
(51) Int. Cl.: G01C 21/36

(54) **A navigation system map panning directional indicator**
Richtungsanzeiger zum Scrollen einer Karte für ein Navigationssystem
Indicateur directionnel pour faire défiler une carte dans un système de navigation

(30) Priority: 05.05.1998 US 84294 P; 19.06.1998 US 100683
(43) Date of publication of application: 11.04.2001
(73) Proprietor: MITAC International Corporation, Hsien 333 (TW)
(72) Inventor: MILLINGTON, Jeffrey, Alan, Rochester Hills, MI 48309 (US)
(74) Representative: Hager, Thomas Johannes
(86) International application number: PCT/US1999/008589
(87) International publication number: WO 1999/057519

(56) References cited:
- EP-A- 0 896 315
- EP-A1- 0 731 337
- US-A- 4 914 605
- US-A- 5 067 081
- US-A- 5 089 826
- US-A- 5 124 924

## Description

### BACKGROUND OF THE INVENTION

This invention generally relates to navigation or route guidance systems and, more particularly, to a map panning directional indicator for a navigation guidance system.

Navigation systems generally provide a recommended route from a starting point to a desired destination. Generally, the starting point and desired destination are selected from a large map database having a plurality of roads stored in a mass media storage, such as a CD ROM or hard drive, which includes the roads in the area to be travelled by the user. The navigation system can be located in a personal computer or it can be installed in a vehicle. If the navigation system is installed in a vehicle, the starting point is typically the current position of the vehicle, which can be input to the navigation system by an associated position determining system that usually includes a GPS (Global Positioning System) receiver.

The navigation system determines a route from the starting point to the destination utilizing an algorithm well-known to those in the art and currently in use in many navigation systems. Usually there are many potential routes between the selected starting point and the desired destination. Typical navigation systems select a recommended route based upon certain "cost" values associated with each segment of road in the map database. These cost values include the length of the road segment and the estimated time of travel through the road segment. The navigation system selects the potential route with the lowest total cost to be the recommended route. Depending upon the predetermined algorithm of the navigation system, the navigation system will recommend the route with the shortest total length, the lowest total time, or some weighted average of length and time.

The recommended route is then displayed to the user on a map showing the starting point and desired destination and highlighting the recommended route. Preferably, if the navigation system is installed in a vehicle, the navigation system displays the current position of the vehicle and provides tum-by-turn instructions to the driver, guiding the driver to the selected destination.

The size of a section of the map database that can be shown legibly is limited by the size of a display device of the navigation system. Frequently, a user wishes to see areas of the map database that are not currently displayed.
Thus, the typical navigation system permits a user to pan or scroll to other areas of the map database and to display the panned map section. Many times the panned map section does not include the current vehicle location. The typical navigation system does not provide any indication to the user regarding either the relative distance between the current vehicle location and the panned map section or the direction of the current vehicle position relative to the panned map section.

Thus, it is desirable to provide a map panning directional indicator that continuously informs the user regarding both the distance between a panned map section and the current vehicle location and the direction of the current vehicle location relative to the panned map section.

EP 0731337 A1 discloses a method for indicating a position on a map of a navigation system, said method comprising the step of determining a current vehicle location at a first position relative to a map database.

### SUMMARY OF THE INVENTION

In general terms, this invention provides a map panning directional indicator that shows a user the distance between a first position and a panned map section and the direction of the first position relative to the panned map section.

A user utilizes a directional user input device to pan from the first position to a second position, which may be on another portion of a map database. The portion of the map database is displayed on a display device. As the user pans, a CPU determines a heading from a cursor located at the second position to the first position. The heading is determined by computing the angle between the latitude and longitude coordinates of the first position and the latitude and longitude coordinates of the panning cursor. The computed angle is used to index an array of pre-rendered bitmaps that define the position of a directional arrow that is connected to the panning cursor and that points toward the first position. The CPU also calculates the straight line distance between the panning cursor and the first position and displays the distance adjacent the panning cursor. Preferably, the navigation system is located in a vehicle and the first position is a current location of the vehicle.

These and other features and advantages of this invention will become more apparent to those skilled in the art from the following detailed description of the presently preferred embodiment. The drawings that accompany the detailed description can be described as follows.

### BRIEF DESCRIPTION OF THE DRAWINGS

Figure 1is a schematic of a navigation system with a map panning directional indicator of the present invention installed in a vehicle;
Figure 2 is a top plan view of a map section located in a map database of the navigation system and a plurality of screen sections superimposed on the map section;
Figure 3 is a screen display of one of the screen sections shown in Figure 2; and
Figure 4 is a top plan view of a directional user input device.

### DETAILED DESCRIPTION OF THE PREFERRED EMBODIMENT

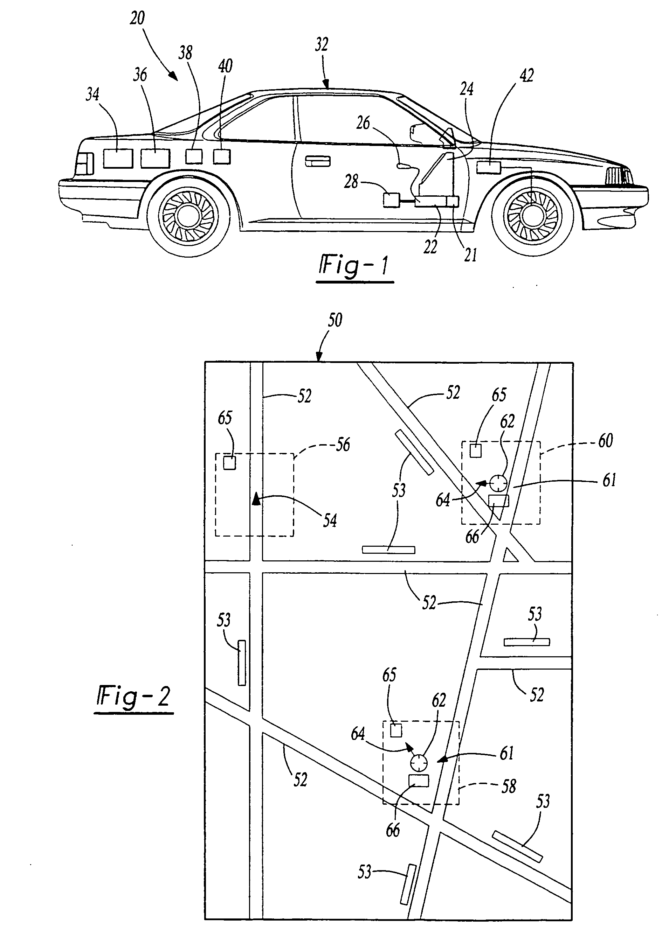

The navigation system 20 of the present invention is shown schematically in Figure 1. The navigation system 20 includes a CPU 22 (Central Processing Unit) having a route determination system 21 and connected to a display device 24, such as a high resolution LCD or flat panel display. The CPU 22 is also connected to a directional user input device 26. The navigation system 20 further includes a map database 28 connected to the CPU 22. The map database 28 is a mass media storage device, such as a CD ROM or hard drive, which includes a map having all the roads in the area to be travelled by the user. Each road in the map database 28 is divided into road segments, each having an associated set of cost values, which indicate the "cost" of traveling that road segment. For example, the cost values may include the length of the road segment, the estimated time to travel the road segment, and the type of road (i.e., highway, secondary road, toll road, one way, etc.).

The navigation system 20 can, but need not, be installed in a vehicle 32. The navigation system 20 can be used in conjunction with position determining devices, such as a GPS receiver 34, a gyroscope 36, a compass 38, an orthogonal multi-axis accelerometer 40 and a wheel speed sensor 42, all connected to the CPU 22 (connections not shown for simplicity). Such position determining devices are well-known and are commercially available. Preferably, a combination of these position determining devices is utilized. Using known software algorithms and technologies, such as dead-reckoning or map-matching or others, the CPU 22 in combination with the position determining device determines the current position of the navigation system 20 or the vehicle 32 relative to the map database 28.

The route determination system 21 in the CPU 22 determines a route from a beginning point to a destination point. When the navigation system is installed in vehicle 32, the current position of vehicle 32 is preferably used as the beginning point and a user selects a destination point. In use of the present invention, preferably the destination point is the location of cursor 62 (see Figure 2). Preferably, the beginning point and destination point are points on road segments on the map database 28. As will be understood by one having ordinarily skill in the art, the beginning point and destination point could be any points on the map database 28, such as off-road points. The CPU 22 then displays at least a portion of the determined route on the display device 24.

Figure 2 is a top plan view of a map section 50 located in the database 28 of the navigation system 20. The map section 50 includes a plurality of roads 52. Adjacent each road 52 is a name field 53 that displays the name of the road 52. A current vehicle location icon 54 is located at a first position on one of the roads 52 at the current vehicle location as determined by the CPU 22 and one of the position determining devices as described above. As will be understood the icon 54 could also be located off-road and if navigation system 20 were not in a vehicle 32 then the icon 54 would indicate the current position of the navigation system 20 relative to the map database 28.

Superimposed on the map section 50 are a first screen section 56, a second screen section 58 and a third screen section 60. Each of the screen sections 56-60 represent the area of the map section 50 that can be displayed at one time on the display device 24 at a given display scale. It should be recognized that the operation would be identical at any display scale. The second screen section 58 and the third screen section 60 represent panned sections of the map section 50 to which a user could selectively pan the display device 24. Each panned section, 58 and 60, includes a map panning directional indicator 61 having a cursor 62, such as a panning bullseye, which is located at a second position relative to the map database 28 in the center of the panned section. Attached to and projecting from each cursor 62 is a directional arrow 64. The map panning directional indicator 61 further includes a distance field 66 located adjacent to the cursor 62. Each screen section 56-60 also includes a current road field 65. When a screen section 56-60 is displayed on display device 24, the current road field 65 displays the name of the road that icon 54 is on.

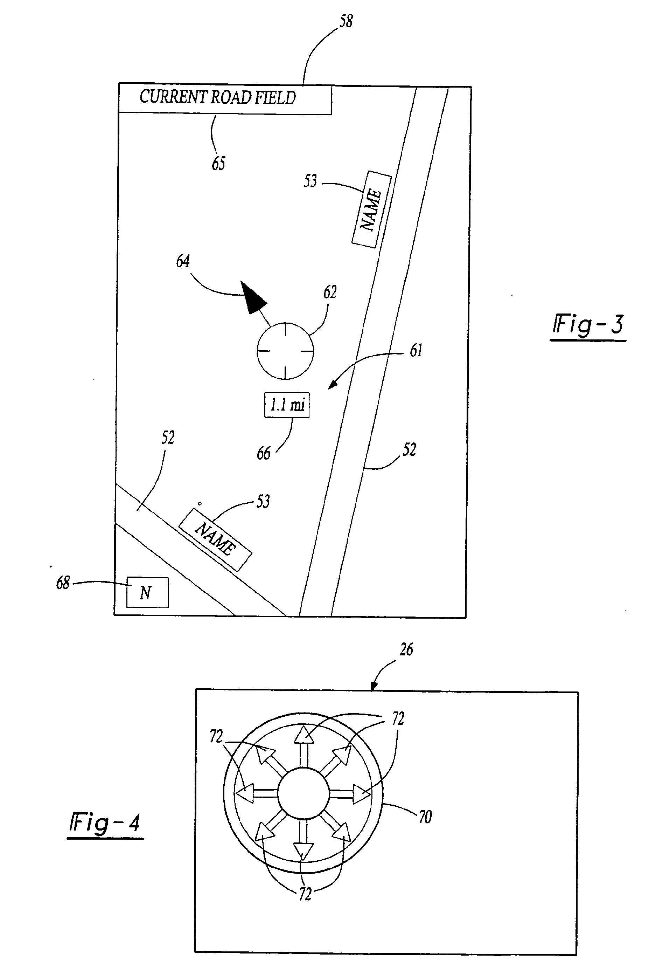

Figure 3 is a screen display of the second screen section 58 as shown in Figure 2 displayed on the display device 24. When a screen section 56-60 is displayed on the display device 24 it also includes a current heading field 68 that displays the current compass heading of the vehicle 32 or navigation system 20. The directional arrow 64 points toward the current vehicle location relative to the cursor 62 and is updated as the user pans the display device 24 to other screen sections 56-60. The distance field 66 shows the straight line distance between the cursor 62 and the current vehicle location. A user can select to have distance field 66 display the distance between cursor 62 and the current vehicle location 54 on a determined route as described below.

Figure 4 is a top plan view of a directional user input device 26 that includes a directional input button 70 having a plurality of directional arrows 72. Preferably, there are eight directional arrows 72, but there could be four. Activation of one of the directional arrows 72 causes the display device 24 to pan the database 28 in the associated direction of the directional arrow 72.

In use, the map panning directional indicator 61 will be described as it would be used to pan the second screen section 58 described above. Initially, the display device 24 displays the first screen section 56 as shown in Figure 2. The first screen section 56 includes a road 52 and the current vehicle location icon 54 located at a first position which is the current vehicle location relative to map database 28, the position of the icon 54 changes as the current vehicle location changes. In addition, the current heading field 68 would display the current compass heading of the vehicle 32. To begin panning the map section 50, the user presses one of the directional arrows 72 of the direction input button 70. The particular directional arrow 72 chosen would be the one oriented in the direction the user wishes to pan.

Each time a directional arrow 72 is pressed, another panned map section is displayed, holding down a directional arrow 72 pans continuously in the associated direction. As shown in Figure 3, when a user is panning, the cursor 62 is superimposed in the center of the screen display of the panned map section at a second position relative to map database 28. Continuing to pan map database 28 moves cursor 62 to a third position, a fourth position and so on. The CPU 22 continuously calculates the heading between the cursor 62 and the current vehicle location icon 54 using the latitude and longitude coordinates of each. In addition, the CPU 22 continuously calculates the distance between the cursor 62 and the current vehicle location icon 54 either on a straight line or on a determined route.

Based on the heading calculated between the cursor 62 and the current vehicle location icon 54, the CPU 22 indexes an array of pre-rendered bitmap symbols that define the position of the directional arrow 64 on the cursor 62 and displays the bitmap symbol on the panned map section. Preferably, the array of pre-rendered bitmaps includes at least eight bitmaps one each for the compass headings of north, northeast, east, southeast, south, southwest, west and northwest. Thus, a heading of approximately 315° between the cursor 62 and the current vehicle location 54 is represented by a bitmap having the directional arrow 64 positioned as shown in Figure 3. When the heading changes, due to a change in either the current vehicle location 54 or the cursor 62, the CPU 22 indexes the array and displays a new bitmap as appropriate.

Most preferably, each bitmap would correspond to a range of compass headings. By way of example, a heading between approximately 337.5° to 22.5° would correspond to a directional arrow positioned at a compass position of north on the cursor 62. As would be understood by one of ordinary skill in the art, the number of pre-rendered bitmaps could be much larger than the eight compass headings described above to provide higher resolution of the heading.

The distance field 66 continuously updates the distance between the cursor 62 and the icon 54 at the current vehicle location. The distance is expressed in either miles or kilometers as chosen by the user. The location of the distance field 66 relative to the cursor 62 is a function of the particular pre-rendered bitmap chosen. The distance field 66 is positioned below the cursor 62 when the directional arrow 64 is even with or above a heading of either east or west. The distance field 66 is positioned above the cursor 62 when the directional arrow 64 is below a heading of east or west, for example, a heading of south.

The route determination system 21 continuously determines a route from the first position or current vehicle location 54 to the cursor 62. When the determined route includes travel on roads 52 in map database 28, the route is determined based on the cost factors associated with each road segment as described above. The navigation system 20 can also determine a route that does not use any roads 52, as when vehicle 32 is off-road. The determined route is displayed on the display device 24. Depending on the scale, display device 24 may only display a portion of the determined route. The user can select to have distance field 66 display the distance between icon 54 and cursor 62 on the determined route.

The present invention has been described in use in vehicle 32, obviously navigation system 20 need not be installed in vehicle 32. In that case, the navigation system 20 would operate as described above except the first position and icon 54 would be the current navigation system 20 location relative to map database 28 and current heading field 68 would be the current heading of navigation system 20. In addition, the route would be determined between the current location of the navigation system 20 and the cursor 62.

The present invention has been described in accordance with the relevant legal standards, thus the foregoing description is exemplary rather than limiting in nature. Variations and modifications to the disclosed embodiment may become apparent to those skilled in the art and do come within the scope of this invention. Accordingly, the scope of legal protection afforded this invention can only be determined by studying the following claims.

## Claims

1. A method for indicating a position on a map of a navigation system (20), said method comprising the steps of:
a.) determining a current vehicle location (54) at a first position relative to a map (28) database; **characterized by**
b.) displaying on a display (24) a cursor (62) at a second position relative to said map database (28), wherein when a user is panning, the cursor (62) is superimposed on the display of the panned map section at the second position;
c.) computing a heading between said cursor (62) and said current vehicle location (54); and
d.) based on said heading, indicating a direction from said cursor (62) to the current vehicle location (54) simultaneously with said step b).

2. A method as recited in Claim 1 wherein step a.) comprises the further steps of:
determining a current vehicle location (54); and using said current vehicle location (54) as said first position.

3. A method as recited in Claim 2 comprising the further steps of: determining a current vehicle compass heading; and displaying said current vehicle compass heading on said display (24).

4. A method as recited in Claim 1 comprising the further steps after steps a.) through d.) of:
e.) moving by a user input said cursor (62) from said second position to a third position relative to said map database;
f.) computing a second heading between said third position and said first position; and
g.) based on said second heading, indicating the direction from said third position to said first position.

5. A method as recited in Claim 1 wherein step b.) further includes the step of panning said display from a first screen section (56) which includes said first position to a second screen section (58) which does not include said first position.

6. A method as recited in Claim 1 wherein step c.) comprises the additional steps of:
determining the latitude and the longitude coordinates of said second position;
determining the latitude and the longitude coordinates of said first position;
calculating an angle between said second position and said first position based on the coordinates; and
determining said heading in said step c.) based on said angle.

7. A method as recited in Claim 1 wherein step d.) comprises the further steps of:
selecting one of a plurality of pre-rendered bitmaps based on said heading; and
displaying said selected bitmap on said display to indicate said direction.

8. A method as recited in Claim 1 comprising the further steps of: determining a straight line distance between said second position and said first position; and displaying said straight line distance on said display (24).

9. A method as recited in Claim 8 comprising the additional steps of: determining the latitude and the longitude coordinates of said second position; determining the latitude and the longitude coordinates of said first position; and determining said straight line distance based on the coordinates.

10. A method as recited in Claim 1 further comprising the steps of: determining a route via said map database (28) between said first position and said second position; and
displaying at least a portion of said route on said display (24).

11. A navigation System comprising:
Means for determining a current vehicle location (54) at a first position relative to a map (28) database;
Means for displaying on a display (24) a cursor (62) at a second position relative to said map database (28), wherein when a user is panning, the cursor (62) is superimposed on the display of the panned map section at the second position;
Means for computing a heading between said cursor (62) and said current vehicle location (54); and
Means for indicating based on said heading a direction from said cursor (62) to the current vehicle location (54).

12. A navigation System as recited in Claim 11 further comprising a position
determining device for determining a current position of said navigation system (20); and
said current location being used as said first position.

13. A navigation system as recited in Claim 11 wherein said display further displays a current compass heading of said navigation system.

14. A navigation system as recited in Claim 11 wherein said display further displays a straight line distance from said first position to said cursor (62).

15. A navigation system as recited in Claim 11 further including a plurality of pre-rendered panning symbols (61), said cursor (62) being comprised in one of said pre-rendered panning symbols (61) selected for display based on said position of said first position relative to said second position.

16. A navigation system as recited in Claim 11 further comprising.
a route determination system calculating a route between said first position and said cursor (62); and
said display displaying at least a portion of said route.

17. A navigation system (20) as recited in Claim 11 wherein said cursor (62) being comprised in one of a plurality of pre-rendered bitmap symbols, one of said pre-rendered bitmap symbols being displayed based on said direction.

18. A navigation system as recited in Claim 11 wherein said display (24) displays said cursor (62) relative to a plurality of road segments.

## Patentansprüche

1. Verfahren zum Kennzeichnen einer Position auf einer Landkarte eines Navigationssystems (20), wobei das Verfahren die Schritte aufweist:
a.) Ermitteln eines momentanen Fahrzeugstandorts (54) auf einer ersten Position relativ zu einer Datenbank einer Landkarte (28), **gekennzeichnet durch**
b.) Anzeigen eines Cursors (62) auf einem Display auf einer zweiten Position relativ zur Landkarten-Datenbank (28), wobei, wenn ein Nutzer verschiebt, der Cursor (62) auf dem Display des verschobenen Kartenbereichs auf der zweiten Position überlagert wird;
c.) Berechnen einer Strecke zwischen dem Cursor (62) und dem momentanen Fahrzeugstandort (54); und
d.) Kennzeichnen einer Richtung vom Cursor (62) zum momentanen Fahrzeugstandort (54) basierend auf der Strecke gleichzeitig mit dem Schritt b).

2. Verfahren nach Anspruch 1, wobei der Schritt a.) ferner folgende Schritte umfasst:
Ermitteln eines momentanen Fahrzeugstandorts (54); und Verwenden des momentanen Fahrzeugstandorts (54) als erste Position; und Verwenden des momentanen Fahrzeugstandorts (54) als erste Position.

3. Verfahren nach Anspruch 2, das ferner folgende Schritte umfasst:
Ermitteln eines momentanen Fahrzeug-Kompasskurses; und Anzeigen des momentanen Fahrzeug-Kompasskurses auf dem Display (24).

4. Verfahren nach Anspruch 1, das die weiteren Schritte nach den Schritten a.) bis d.) umfasst:
e.) Bewegen des Cursors (62) durch eine Benutzereingabe von der zweiten Position auf eine dritte Position relativ zur Landkarten-Datenbank;
f.) Berechnen einer zweiten Strecke zwischen der dritten Position und der ersten Position; und
g.) Kennzeichnen der Richtung von der dritten Position zur ersten Position basierend auf der zweiten Strecke.

5. Verfahren nach Anspruch 1, wobei der Schritt b.) ferner den Schritt des Verschiebens des Displays von einem ersten Bildschirmbereich (56), der die erste Position enthält, auf einen zweiten Bildschirmbereich (48) umfasst, der die erste Position nicht enthält.

6. Verfahren nach Anspruch 1, wobei der Schritt c.) folgende weitere Schritte umfasst:
Ermitteln der Breitengrad- und der Längengradkoordinaten der zweiten Position;
Ermitteln der Breitengrad- und der Längengradkoordinaten der ersten Position;
Berechnen eines Winkels zwischen der zweiten Position und der ersten Position basierend auf den Koordinaten; und
Ermitteln der Strecke im Schritt c.) basierend auf dem Winkel.

7. Verfahren nach Anspruch 1, wobei der Schritt d.) die weiteren Schritte umfasst:
Auswählen eines aus einer Mehrzahl von vor-gerenderten Bitmaps basierend auf der Strecke; und
Anzeigen des gewählten Bitmap auf dem Display, um die Richtung zu kennzeichnen.

8. Verfahren nach Anspruch 1, das die weiteren Schritte umfasst:
Ermitteln einer direkten Entfernung zwischen der zweiten Position und der ersten Position; und
Anzeigen der direkten Entfernung auf dem Display (24).

9. Verfahren nach Anspruch 8, das die folgenden zusätzlichen Schritte umfasst: Ermitteln der Breitengrad- und der Längengradkoordinaten der zweiten Position; Ermitteln der Längengrad und Breitengradkoordinaten der ersten Position; und Ermitteln der direkten Entfernung basierend auf den Koordinaten.

10. Verfahren nach Anspruch 1, das ferner die Schritte umfasst: Ermitteln
einer Route durch die Landkarten-Datenbank (28) zwischen der ersten Position und der zweiten Position; und
Anzeigen zumindest eines Teils der Route auf dem Display (24).

11. Navigationssystem, umfassend:
eine Einrichtung zum Ermitteln eines momentanen Fahrzeugstandorts (54) auf einer ersten Position relativ zu einer Datenbank einer Landkarte (28);
eine Einrichtung zum Anzeigen eines Cursors (62) auf einem Display (24) auf einer zweiten Position relativ zur Landkarten-Datenbank (28), wobei, wenn ein Nutzer verschiebt, der Cursor (62) auf dem Display des verschobenen Kartenbereichs auf der zweiten Position überlagert wird;
eine Einrichtung zum Berechnen einer Strecke zwischen dem Cursor (62) und dem momentanen Fahrzeugstandort (54); und
eine Einrichtung zum Kennzeichnen der Richtung vom Cursor (62) zum momentanen Fahrzeugstandort (54).

12. Navigationssystem nach Anspruch 11, ferner umfassend: eine Positions-Ermittlungsvorrichtung zum Ermitteln einer momentanen Position des Navigationssystems (20) und wobei der momentane Standort als erste Position verwendet wird.

13. Navigationssystem nach Anspruch 11, wobei das Display ferner einen momentanen Kompasskurs des Navigationssystems angezeigt.

14. Navigationssystem nach Anspruch 11, wobei das Display ferner eine direkte Entfernung von der ersten Position zum Cursor (62) anzeigt.

15. Navigationssystem nach Anspruch 11, ferner umfassend eine Mehrzahl von vor-gerenderten Verschiebungssymbole (61), wobei der Cursor (62) in einem der vor-gerenderten Verschiebungssymbolen (61) enthalten ist, die zum Anzeigen basierend auf der Position der ersten Position relativ zur zweiten Position ausgewählt wurden.

16. Navigationssystem nach Anspruch 11, ferner umfassend:
ein Routen-Ermittlungssystem, das eine Route zwischen der ersten Position und dem Cursor (62) berechnet; und
wobei das Display zumindest einen Teil der Route anzeigt.

17. Navigationssystem (20) nach Anspruch 11, wobei der Cursor (62) in einem der vor-gerenderten Bitmap-Symbolen enthalten ist, wobei eines der vor-gerenderten Bitmap-Symbole basierend auf der Richtung angezeigt wird.

18. Navigationssystem (20) nach Anspruch 11, wobei das Display (24) den Cursor (62) relativ zu einer Mehrzahl von Straßen-Segmenten angezeigt.

## Revendications

1. Procédé pour indiquer une position sur une carte d'un système de navigation (20), ledit procédé comprenant l'étape consistant à :
a) déterminer un emplacement actuel de véhicule (54) dans une première position par rapport à une base de données de carte (28) ; **caractérisé par** les étapes consistant à :
b) afficher sur un écran (24), un curseur (62) dans une deuxième position par rapport à ladite base de données de carte (28), dans lequel lorsqu'un utilisateur fait une vision panoramique, le curseur (62) est superposé sur l'écran de la section de carte en vue panoramique dans la seconde position ;
c) calculer un cap entre ledit curseur (62) et ledit emplacement actuel de véhicule (54) ; et
d) en fonction dudit cap, indiquer une direction dudit curseur (62) à l'emplacement actuel de véhicule (54) simultanément avec ladite étape b).

2. Procédé selon la revendication 1, dans lequel l'étape a) comprend les étapes supplémentaires consistant à :
déterminer un emplacement actuel de véhicule (54) ; et utiliser ledit emplacement actuel de véhicule (54) en tant que ladite première position.

3. Procédé selon la revendication 2, comprenant les étapes supplémentaires consistant à :
déterminer un cap compas actuel du véhicule ; et afficher ledit cap au compas actuel du véhicule sur ledit affichage (24).

4. Procédé selon la revendication 1, comprenant les étapes supplémentaires après les étapes a) à d) consistant à :
e) déplacer par une saisie utilisateur, ledit curseur (62) de ladite deuxième position à une troisième position par rapport à ladite base de données de carte ;
f) calculer un deuxième cap entre ladite troisième position et ladite première position ; et
g) en fonction dudit deuxième cap, indiquer la direction de ladite troisième position à ladite première position.

5. Procédé selon la revendication 1, dans lequel l'étape b) comprend en outre l'étape consistant à faire un panoramique dudit affichage à partir d'une première section d'écran (56) qui comprend ladite première position sur une seconde section d'écran (58) qui ne comprend pas ladite première position.

6. Procédé selon la revendication 1, dans lequel l'étape c) comprend les étapes supplémentaires consistant à :
déterminer les coordonnées de latitude et de longitude de ladite deuxième position ;
déterminer les coordonnées de latitude et de longitude de ladite première position ;
calculer un angle entre ladite deuxième position et ladite première position en fonction des coordonnées ; et
déterminer ledit cap à ladite étape c) en fonction dudit angle.

7. Procédé selon la revendication 1, dans lequel l'étape d) comprend les étapes supplémentaires consistant à :
sélectionner l'une parmi une pluralité de représentations binaires prérendues sur ledit cap ; et
afficher ladite représentation binaire sélectionnée sur ledit affichage pour indiquer ladite direction.

8. Procédé selon la revendication 1, comprenant les étapes supplémentaires consistant à : déterminer une distance en ligne droite entre ladite deuxième position et ladite première position ; et
afficher ladite distance en ligne droite sur ledit affichage (24).

9. Procédé selon la revendication 8, comprenant les étapes supplémentaires consistant à : déterminer les coordonnées de latitude et de longitude de ladite deuxième position ; déterminer les coordonnées de latitude et de longitude de ladite première position ; et déterminer ladite distance en ligne droite en fonction des coordonnées.

10. Procédé selon la revendication 1, comprenant en outre les étapes consistant à : déterminer un itinéraire via ladite base de données de carte (28) entre ladite première position et ladite deuxième position ; et
afficher au moins une partie dudit itinéraire sur ledit affichage (24).

11. Système de navigation comprenant :
des moyens pour déterminer un emplacement actuel de véhicule (54) dans une première position par rapport à une base de données de carte (28) ;
des moyens pour afficher sur un affichage (24), un curseur (62) dans une deuxième position par rapport à ladite base de données de carte (28), dans lequel lorsqu'un utilisateur fait un panoramique, le curseur (62) est superposé sur l'affichage de la section de carte mise en panoramique dans la deuxième position ;
des moyens pour calculer un cap entre ledit curseur (62) et ledit emplacement actuel de véhicule (54) ; et
des moyens pour indiquer en fonction dudit cap, une direction allant dudit curseur (62) audit emplacement actuel de véhicule (54).

12. Système de navigation selon la revendication 11, comprenant en outre : un dispositif de détermination de position pour déterminer une position actuelle dudit système de navigation (20) ; et
ledit emplacement actuel étant utilisé en tant que ladite première position.

13. Système de navigation selon la revendication 11, dans lequel ledit affichage affiche en outre un cap compas actuel dudit système de navigation.

14. Système de navigation selon la revendication 11, dans lequel ledit affichage affiche en outre une distance en ligne droite de ladite première position jusqu'audit curseur (62).

15. Système de navigation selon la revendication 11, comprenant en outre une pluralité de symboles panoramiques pré-rendus (61), ledit curseur (62) étant compris dans l'un desdits symboles panoramiques pré-rendus (61) choisis pour l'affichage en fonction de ladite position de ladite première position par rapport à ladite deuxième position.

16. Système de navigation selon la revendication 11, comprenant en outre :
un système de détermination d'itinéraire calculant un itinéraire entre ladite première position et ledit curseur (62) ; et
ledit affichage affichant au moins une partie dudit itinéraire.

17. Système de navigation (20) selon la revendication 11, dans lequel ledit curseur (62) est compris dans l'un d'une pluralité de symboles de représentation binaire pré-rendus, l'un desdits symboles de représentation binaire pré-rendus étant affiché en fonction de ladite direction.

18. Système de navigation selon la revendication 11, dans lequel ledit affichage (24) affiche ledit curseur (62) par rapport à une pluralité de segments d'itinéraire.
